# EUROPEAN PATENT SPECIFICATION

(11) **EP 2 327 538 B1**
(45) Date of publication and mention of the grant of the patent: **05.09.2012**
(21) Application number: 10252018.6
(22) Date of filing: 29.11.2010
(51) Int. Cl.: B29D 99/00, F01D 5/28

(54) **Method of making composite fan blade**
Verfahren zur Herstellung einer Verbundstofflüfterschaufel
Procédé de fabrication de pale de ventilateur composite

(30) Priority: 30.11.2009 US 627629
(43) Date of publication of application: 01.06.2011
(73) Proprietor: United Technologies Corporation, Hartford, CT 06101 (US)
(72) Inventor: Parkin, Michael, S. Glastonbury, CT 06073 (US); Alexander, Phillip, Colchester, CT 06414 (US); Huth, Brian P., Westfield, MA 01085 (US); Klinetob, Carl Brian, East Haddam, CT 06423 (US)
(74) Representative: Leckey, David Herbert

(56) References cited:
- EP-A1- 1 777 063
- GB-A- 2 262 315
- US-A- 5 279 892

## Description

### BACKGROUND

Composite materials offer potential design improvements in gas turbine engines. For example, in recent years composite materials have been replacing metals in gas turbine engine fan blades because of their high strength and low weight. Most metal gas turbine engine fan blades are titanium. The ductility of titanium fan blades enables the fan to ingest a bird and remain operable or be safely shut down. The same requirements are present for composite fan blades.

A composite airfoil for a turbine engine fan blade can have a sandwich construction with a carbon fiber woven core at the center and two-dimensional filament reinforced plies or laminations on either side. To form the composite airfoil, individual two-dimensional plies are cut and stacked in a mold with the woven core. The mold is injected with a resin using a resin transfer molding process and cured. The plies vary in length and shape.

Previously, the mold was designed first to establish the surface profile of the airfoil. Next, each airfoil ply was designed. Finally, the core was designed to fit in the remaining space. Any change to the airfoil resulted in a time consuming redesign procedure as a change in one airfoil ply required each airfoil ply beneath it and the core to be redesigned.

US-A-5279892 discloses a composite airfoil which comprises a woven composite layer inserted between laminated outer skins

### SUMMARY

The present invention provides a method of forming a composite airfoil as set forth in claim 1.

### BRIEF DESCRIPTION OF THE DRAWINGS

FIG. 1 a is a front view of a composite blade containing a plurality of plies.
FIG. 1b is a cross-sectional view of a tip of the composite blade of FIG. 1a taken along line 1b-1b.
FIG. 2 is a top view of a mold for forming the composite blade of FIG. 1a.
FIG. 3 is a block diagram illustrating a method of forming the composite blade of FIG. 1a.
FIG. 4a is a perspective view of a model blade used to design a woven core for the composite blade.
FIG. 4b is an enlarged view of one section of the model blade of FIG. 4a.

### DETAILED DESCRIPTION

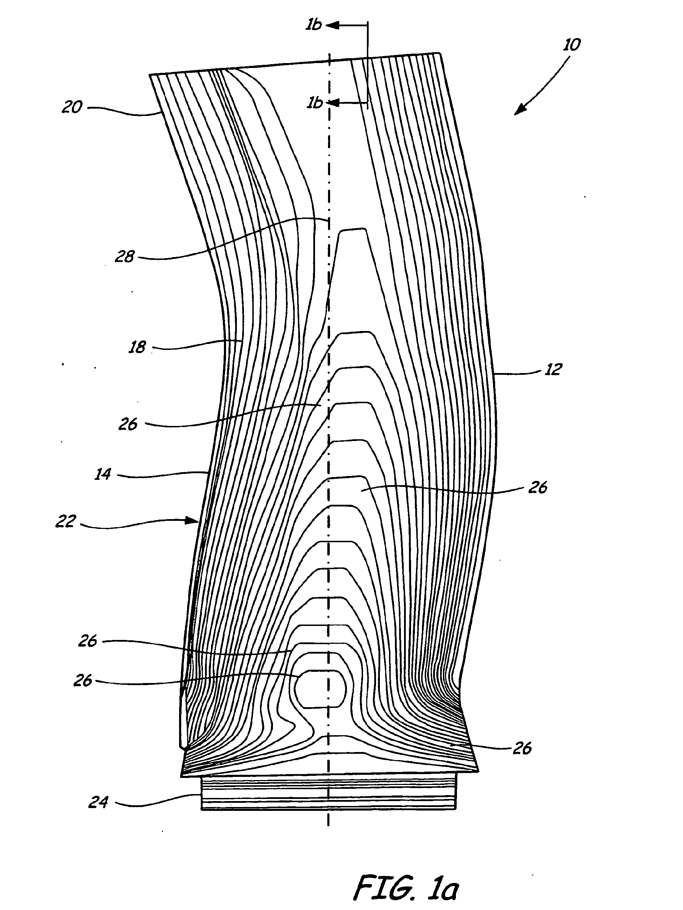

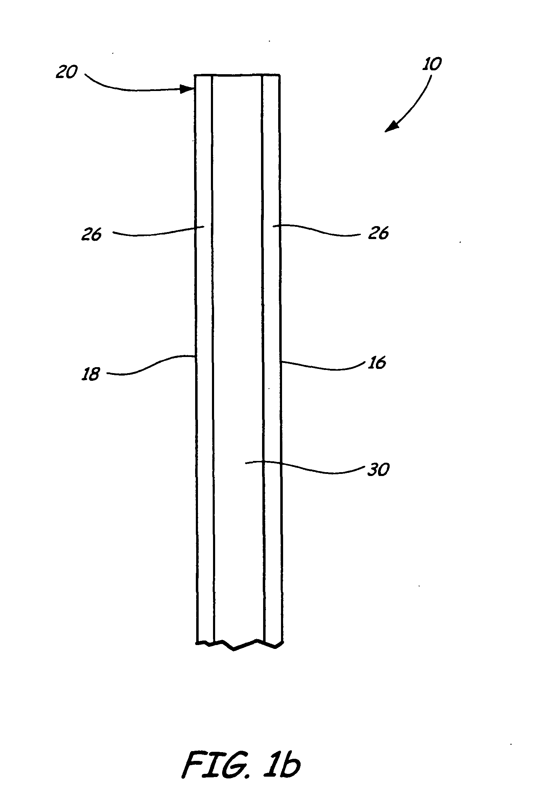

FIG. 1a illustrates composite blade 10 having leading edge 14, trailing edge 12, suction side 16 (shown in FIG. 1b), pressure side 18, tip 20, intermediate region 22, root 24, plies 26 and longitudinal axis 28. Root 24 is illustrated as a dovetail root. However, root 24 can have any configuration. Longitudinal axis 28 extends in the span-wise direction from root 24 to tip 20.

Plies 26 are two-dimensional fabric skins. Elongated fibers extend through plies 26 at specified orientations and give plies 26 strength. Plies 26 vary in shape and size as illustrated. The fiber orientation of plies 26 can also vary. The arrangement of plies 26 is designed according to rules which are described further below. The ply design must manage the locations of the edges of plies 26, particularly the trailing and leading edges 12 and 14 of plies 26. A ply drop is formed at the edges of each ply 26. Ply drops provide initiation sites for damage and cracks. The weakest region for laminated composites is the interlaminar region between the laminates. High interlaminar shear stresses, such as from operational loads and foreign object strikes, in a laminated composite can cause delamination that compromises the structural integrity of the structure. The ply drops in composite blade 10 are staggered and spread apart to prevent crack/delamination propagation. In one example, the ply drops in composite blade 10 are arranged to have a 20:1 minimum ratio of ply drop distance to ply thickness.

FIG. 1b is a cross-sectional view of tip 20 of composite blade 10, which includes plies 26 and woven core 30. Woven core 30 is a woven three-dimensional core formed of woven fibers such as carbon fiber. Woven core 30 extends through the center of composite blade 10. Woven core 30 can extend in the span-wise direction from root 24 to tip 20 and can extend in the chord-wise direction from leading edge 14 to trailing edge 12.

Plies 26 are stacked on either side of woven core 30. Plies 26 define pressure side 18 and suction side 16 of composite blade 10. It is noted that only one ply 26 is illustrated on each side of woven core 30 for clarity. One skilled in the art will recognize that a plurality of plies 26 (as shown in FIG. 1a) are stacked on either side of woven core 30.

Composite blade 10 is formed by stacking plies 26 and woven core 30 in a mold, injecting the mold with a resin and curing. Example resins include but are not limited to epoxy resins and epoxy resins containing an additive, such as rubber. Alternatively, airfoil plies 26 can be preimpregnated composites, (i.e. "prepregs") such that resin is not directly added to the mold.

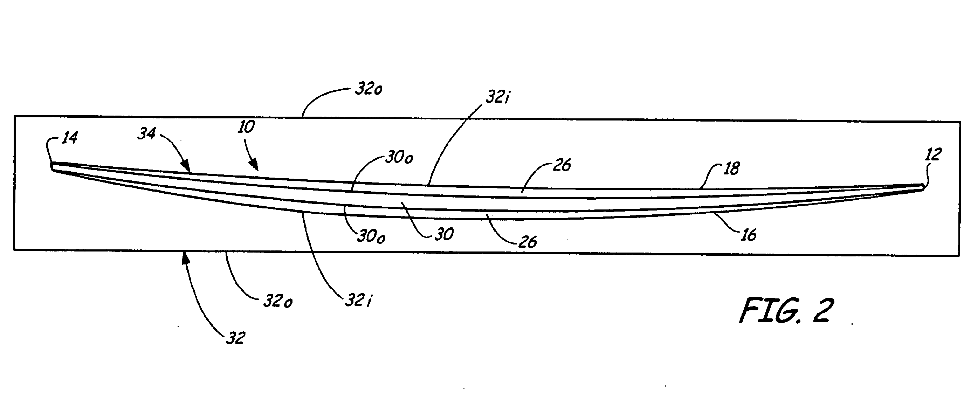

FIG. 2 illustrates composite blade 10 in mold 32 having inner surface 32i and outer surface 32o. Inner surface 32i of mold 32 defines the outer surfaces of pressure side 18 and suction side 16 of composite blade 10. Mold 32 is designed based on the desired outside geometry of blade 10. Mold 32 is a hollow mold. Plies 26 and woven core 30 are stacked in mold 32 and cured with a resin to form composite blade 10. Plies 26 are stacked on outer surfaces 30o of woven core 30. Plies 26 and woven core 30 occupy the entire hollow space in mold 32.

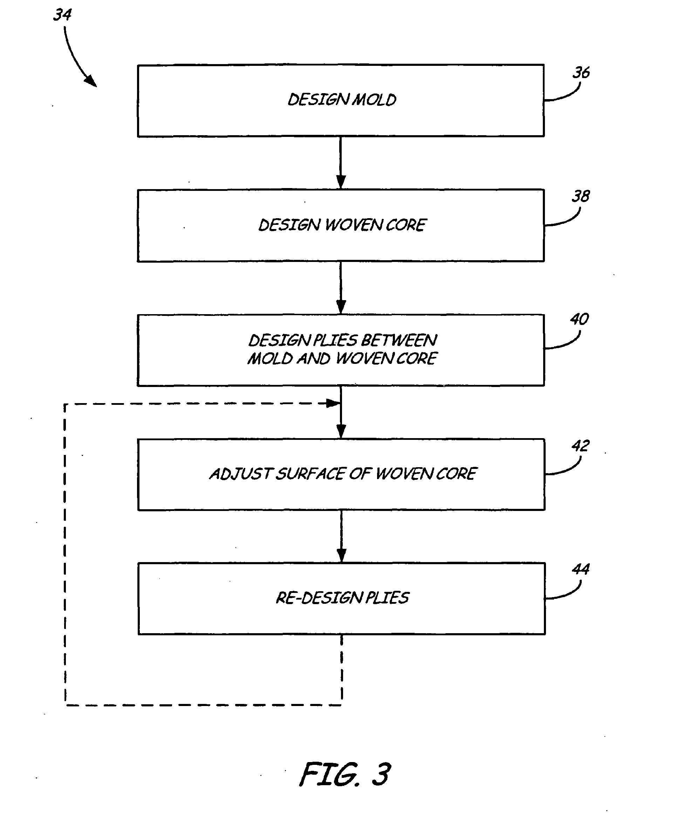

For composite blade 10, mold 32 is designed first. Next, woven core 30 is designed. Finally, plies 26 are designed to fill the gap or space between the inner surface 32i of mold 32 and outer surface 30o of woven core 30. The flow chart of FIG. 3 illustrates method 34 of forming composite blade 10, which includes the steps of designing the mold (step 36), designing the woven core (step 38), designing the plies (step 40), adjusting the outer surface of the woven core (step 42) and re-designing the plies (step 44).

First, mold 32 is designed in step 36. Mold 32 is designed based on the desired outer surface geometry of blade 10. Mold 32 is a hollow mold in which plies 26 and woven core 30 are cured. Inner surface 32i of mold 32 defines the outer surface of blade 10. The aerodynamic and structural characteristics of blade 10 are considered when designing mold 32.

Next, woven core 30 is designed in step 38. Woven core 30 is designed by off-setting inwards from inner surface 32i of mold 32. In one example, woven core is designed by offsetting inwards from inner surface 32i by a specified percentage of the thickness of blade 10 as described further below. Outer surface 30o of woven core 30 follows the outer surface of blade 10 and is a specified percentage from the outer surface of blade 10 at every point along blade 10. In one example, outer surface 30o of woven core 30 is located at 17.5% and at 82.5% of the thickness of blade 10, where the thickness of blade 10 is measured between suction side 16 and pressure side 18. A specific example of designing core 30 is described further below.

After woven core 30 is designed, plies 26 are designed in step 40. Woven core 30 is positioned generally in the middle of mold 32. Plies 26 are designed to fill the void between inner surface 32i of mold 32 and outer surface 30o of woven core 30. As described above, mold 32 is a hollow mold that holds plies 26 and woven core 30. Woven core 30 and plies 26 occupy the entire volume of mold 32. Thus, when woven core 30 is positioned in mold 32, the voids between inner surface 32i of mold 32 and outer surface 30o of woven core 30 must be occupied by plies 26. Inner surface 32i of mold 32 defines the outer surface of plies 26 and outer surface 30o of woven core 30 defines the inner surface of plies 26. Although woven core 30 is illustrated as centered in mold 32 to form a symmetrical blade, an asymmetrical blade can also be formed. In an asymmetrically blade, woven core 30 is off-center in mold 32 such that plies 26 occupy more space on one side of woven core 30 compared to the other side.

Plies 26 can be individually designed or can be designed using a computer-aided design software package. Regardless of the design method used, parameters and constraints are used in designing plies 26. Example parameters include thickness of plies 26 and minimum ply drop. Example constraints include not allowing a ply 26 to fold over on itself. The computer-aided design software package designs the plies by offsetting surfaces from the outside inwards towards core 30. The first ply is offset half of the nominal cure ply thickness. The additional plies are offset the full nominal ply thickness. The ply endings are typically trimmed when they intersect with the surface defining core 30 or another ply surface. In this fashion, each surface offset represents the midplane of a discrete ply.

Next, outer surface 30o of woven core 30 is adjusted in step 42. Outer surface 30o of woven core 30 can be adjusted inward (to reduce the percentage of woven core 30 of blade 10) or can be adjusted outward (to increase the percentage of woven core 30 of blade 10). The first design of plies 26 can result in the edges of plies 26 stacking up, especially at leading edge 14 and trailing edge 12. With certain designs, such as thicker skinned designs, the edges of plies 26 tend to stack up as the edges of blade 10 are approached. When the edges of plies 26 stack up, there are many ply drops in a small area and the risk of crack and delamination propagation increases. It is preferable that the edges of plies 26 directly adjacent to one another are staggered and there is sufficient space between the edges of plies 26. In one example, woven core 30 is adjusted so that plies 26 have a 20:1 minimum ratio of ply drop distance to ply thickness.

The first design of plies 26 can also result in one ply 26 forming an island or in one ply 26 having a hole or a void. Woven core 30 can be adjusted such that plies 26 extend from root 24 without voids or holds. This simplifies manufacturing and lay up of blade 10.

In step 44, plies 26 are re-designed to fill the void between outer surface 30o of woven core 30 and inner surface 32i of mold 32. Steps 42 and 44 are repeated as necessary to tailor plies 26.

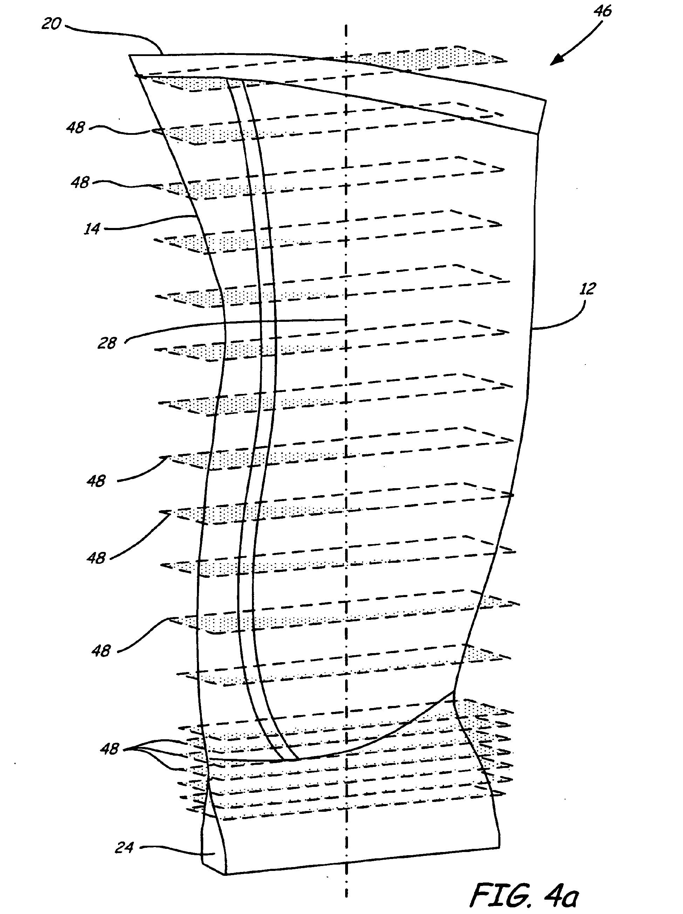

Woven core 30 can be designed in many different ways. One example design method includes the steps: building a blade model, segmenting the blade model, inserting curves between the pressure side and the suction side of each segment and defining points along the curves at specified length percentages. FIG. 4a is a perspective of model 46 of blade 10 of FIG. 1. Model 46 has an outer geometry based on inner surface 32i of mold 32. Chord-wise planes 48 are inserted into blade model 46 perpendicular to span-wise axis 28. Each plane 48 is parallel to root 24. The cross-sections of blade model 46 are formed on each specific plane 48 such that each plane 48 reflects the cross-section of blade model 46 at the location of plane 48. Leading edge 14, trailing edge 12, suction side 16 and pressure side 18 are formed on each plane 48. In one example, segments 48 are spaced about half an inch apart in intermediate region 22 and about 2 inches apart between intermediate region 22 and tip 20.

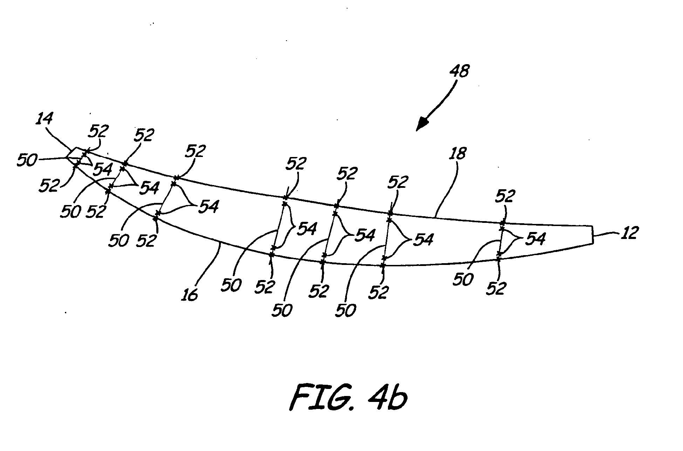

FIG. 4b is an enlarged view of one plane or segment 48 of blade model 46. Plane 48 includes leading edge 14, trailing edge 12, suction side 16, pressure side 18, thickness curves 50, intersection points 52 and interface locations 54. Intersection points 52 indicate where a plurality of planes perpendicular to the mid-surface of blade model 46, spaced along the chord-wise axis and extending in the span-wise direction between root 24 and tip 20 intersect suction side 16 and pressure side 18 of each plane 48. The mid-surface is a surface extending in the chord-wise and span-wise directions and located in the thickness direction exactly between pressure side 18 and suction side 16. Intersection points 52 are perpendicular to the mid-surface of blade model 46 and located on planes 48 parallel to root 24. In one example, intersection points 52 on suction side 16 and pressure side 18 are determined by sweeping a curve that is perpendicular to the mid-surface along lines that are parallel to and off-set from the leading edge of the mid-surface. Intersection points 52 are located where the swept curve intersects suction side 16 and pressure side 18 of the respective plans 48.

Thickness curves 50 are created between aligned intersection points 52 on pressure side 18 and suction side 16. Thickness curves 50 extend through the thickness of blade 10 from pressure side 18 to suction side 16. Thickness curves 50 extend between one intersection point 52 on pressure side 18 to corresponding intersection point 52 on suction side 16.

Interface locations 54 are positioned along thickness curves 50. Interface locations 54 define outer surface 30o of woven core 30 and represent the interface between woven core 30 and plies 26. Interface locations 54 are perpendicular to the mid-surface of blade model 46 and located on plane 48 parallel to root 24. Two interface locations 54 are positioned on each thickness curve 50; one defines the pressure side outer surface 30o and the other represents the suction side outer surface 30o. The location of interface locations 54 are measured as a percentage of the length of thickness curve 50 on which it is positioned, where the percentage is measured from pressure side 18. For example, interface location 54 located at 0% thickness would be at the intersection between thickness curves 50 and pressure side 18, interface location 54 located at 52% thickness would be centered between pressure side 18 and suction side 16 along thickness curve 50, and interface location 54 located at 100% thickness would be at the intersection between thickness curve 50 and suction side 16.

When woven core 30 is initially designed in step 38, interface locations 54 are positioned at specified percentages of the length of thickness curves 50. In one example, interface locations 54 on suction side 16 and pressure side 18 are positioned at the same percentage from their respective sides. For example, interface locations 54 can be positioned at 17.5% and 82.5% (100%-17.5%) of the length of thickness curve 50. In this example, outer surfaces 30o of core 30 are located 17.5% of the way through blade model 34 from pressure side 18 and from suction side 16. A blade 10 built on this model 34 will have 35% of its thickness occupied by plies 26 and 65% of its thickness occupied by woven core 30. In another example, the blade is asymmetrical and interface locations 54 on pressure side 18 are positioned at a different percentage of the length of thickness curve 50 from the pressure side 18 than interface locations 54 on suction side 16. For example, interface locations 54 can be positioned at 17.5% and 81.2% (100%-18.5%) of the length of thickness curve 50. In this example, outer surface 30o of core 30 is located 17.5% of the way through blade model 34 on suction side 16 and 18.5% of the way through blade model 34 on pressure side 18.

In the initial design, interface locations 54 are positioned along thickness curves 50 at specified percentage lengths of thickness curves 50 such that each interface location 54 on pressure side 18 is at the same percentage length of its respective thickness curve 50. Each interface location 54 on suction side 16 is also positioned at the same percentage length of its respective thickness curve 50. Interface locations 54 are off-set inwards towards the center of blade 10 (and mold 32) by a specific percentage. Using blade model 46, surfaces are created through interface locations 54. These surfaces define outer surface 30o of woven core 30. During later designs of woven core 30, such as those of step 42, interface locations 54 are adjusted along thickness curves 50 to tailor the designs of plies 26 and interface locations 54 can be at different percent lengths of thickness curves 50. As described above, interface locations 54 can define outer surface 30o of woven core 30. Alternatively, interface locations 54 can be connected by curves which define outer surface 30o of woven core 30.

Composite blade 10 is designed by first designing mold 32, followed by designing woven core 30 and finally designing plies 26. Mold 32 defines the outer surface of composite blade 10 and plies 26, and woven core 30 defines the inner surface of plies 26. Plies 26 are designed to fill the void between mold 32 and woven core 30. Designing core 30 before designing plies 26 enables an automated tool to be used to populate the void between mold 32 and woven core 30 with plies 26. Designing plies 26 based on woven core 30 eliminates redesigning core 30 and every other ply 26 each time one ply 26 is redesigned. Additionally, the method described above enables an automated tool to be used to design plies 26. For example, an automated tool can be used to populate plies 26 in the void defined between inner surface 32i of mold 32 and outer surface 30o of woven core 30. The use of the automated tool reduces the time required to design plies 26 and increases the speed of iteratively changing the design of woven core 30 and plies 26.

The method described above creates a parametric core model of composite blade 10. Outer surface 30o of woven core 30 is parameterized rather than only given fixed numerical dimensions. The parametric model of woven core 30 enables the surface of woven core 30 to follow the adjustment of one or more interface locations 40. This reduces the time required for iterative re-designing of woven core 30 and all plies 26.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of forming a composite airfoil (10) having a suction side (16), a pressure side (18), a tip (20) and a root (24), the method comprising:
designing a hollow mold (32) having an inner surface (32i) which defines a surface profile of the composite airfoil;
designing a woven core (30) for placement in the mold;
designing a plurality of plies (26) to fit between the inner surface of the mold (32) and an outer surface (30o) of the woven core (30), wherein the plurality of plies (26) are designed after the step of designing the woven core (30); and
assembling the designed woven core (30) and plurality of plies (26) in the mold (32) to create the composite airfoil (10).

2. The method of claim 1 and further comprising:
building a parametric core model comprising:
sectioning a model of the airfoil into sections along a span-wise axis;
inserting a curve in each section that extends between a suction side and a pressure side of the airfoil model; and
defining a point on each curve based on a percentage P of a length of the curve, wherein the point represents an interface between the woven core and the plies, and wherein the point is used in the step of designing the woven core.

3. The method of claim 2 wherein the step of designing the plurality of plies (26) comprises:
populating a space between the inner surface (32i) of the mold (32) and the outer surface (30o) of the woven core (30) with plies (26).

4. The method of claim 2 or 3 and further comprising:
adjusting the locations of the points on the curves to locally optimize ply drops,
for example adjusting the locations of the points on the curves so that there is a 20:1 minimum ratio of ply drop distance to ply thickness for each ply (26).

5. The method of any of claims 2 to 4, wherein the step of defining a point on each curve based on a percentage P of a length of the curve comprises:
defining a point that is perpendicular to a mid-surface of the parametric core model and parallel to a root of the airfoil model.

6. The method of any of claims 2 to 5, and further comprising:
defining a second point on each curve based on a second percentage P2 of the length of the curve, wherein the points define an interface between the plies and a pressure side of the woven core and the second points define an interface between the plies and a suction side of the woven core.

7. The method of any preceding claim, wherein the woven core is a three-dimensional woven core.

8. The method of any preceding claim, wherein the plies (26) are composite plies including a plurality of fibers and a resin.

## Patentansprüche

1. Verfahren zum Ausbilden eines Verbund-Strömungsprofils (10), das eine Saugseite (16), eine Druckseite (18), eine Spitze (20) und eine Wurzel (24) aufweist, wobei das Verfahren umfasst:
Ausbilden eines hohlen Formkörpers (32), der eine innere Fläche (32i) aufweist, die ein Flächenprofil des Verbund-Strömungsprofils definiert;
Ausbilden eines Web/Wirk-Kerns (30) zum Platzieren in dem Fornikörper,
Ausbilden einer Mehrzahl von Lagen (26) zum Einpassen zwischen der inneren Fläche des Formkörpers (32) und der äußeren Fläche (30o) des Web/Wirk-Kerns (30), wobei die Mehrzahl von Lagen (26) nach dem Schritt des Ausbildens des Web/Wirk-Kerns (30) ausgebildet sind; und
Zusammenbauen des ausgebildeten Web/Wirk-Kerns (30) und der ausgebildeten Mehrzahl von Lagen (26) in den Formkörper (32) zum Erzeugen des Verbund-Strömungsprofils (10).

2. Verfahren nach Anspruch 1 und des Weiteren umfassend:
Ausbilden eines parametrischen Kernmodells umfassend:
Aufteilen eines Modells des Strömungsprofils in Bereiche entlang einer in Spannrichtung verlaufenden Achse;
Einfügen eines Bogens in jeden Bereich, der sich zwischen einer Saugseite und einer Druckseite des Strömungsprofil-Modells erstreckt; und
Definieren eines Punktes auf jedem Bogen, basierend auf einem Anteil P an einer Länge des Bogens, wobei der Punkt eine Schnittstelle zwischen dem Web/Wirk-Kern und den Lagen repräsentiert, und wobei der Punkt in dem Schritt des Ausbildens des Web/Wirk-Kerns verwendet wird.

3. Verfahren nach Anspruch 2, wobei der Schritt des Ausbildens der Mehrzahl von Lagen (26) umfasst:
Bestücken eines Raums zwischen der inneren Fläche (32i) des Formkörpers (32) und der äußeren Fläche (30o) des Web/Wirk-Kerns (30) mit Lagen (26).

4. Verfahren nach Anspruch 2 oder 3 und des Weiteren umfassend:
Anpassen der Orte der Punkte auf den Bögen, um Lagenabsenkungen lokal zu optimieren, zum Beispiel Anpassen der 0rte der Punkte auf den Bögen, sodass ein minimales Verhältnis von 20:1 von Lagenabsenkunsabstand zu Lagendicke für jede Lage (26) vorhanden ist.

5. Verfahren nach einem der Ansprüche 2 bis 4, wobei der Schritt des Definierens eines Punktes auf jedem Bogen basierend auf einem Anteil P an einer Länge des Bogens umfasst:
Definieren eines Punktes, der senkrecht zu einer Mittelflache des parametrischen Kernmodells und parallel zu einer Wurzel des Strömungsprofil-Modells ist.

6. Verfahren nach einem der Ansprüche 2 bis 5 und des Weiteren umfassend:
Definieren eines zweiten Punktes auf jedem Bogen basieren auf einem zweiten Anteil P2 an der Länge des Bogens, wobei die Punkte eine Schnittstelle zwischen den Lagen und einer Druckseite des Web/Wirk-Kerns definieren und die zweiten Punkte eine Schnittstelle zwischen den Lagen und der Saugseite des Web/Wirk-Kerns definieren.

7. Verfahren nach einem der vorangehenden Ansprüche, wobei der Web/Wirk-Kern ein dreidimensionaler Web/Wirk-Kern ist.

8. Verfahren nach einem der vorangehenden Ansprüche, wobei die Lagen (26) Verbundlagen sind, die eine Mehrzahl von Fasern und einen Harz beinhalten.

## Revendications

1. Procédé de formation d'une pale composite (10) ayant un côté d'aspiration (16), un côté de pression (18), une pointe (20) et une base (24),
le procédé comprenant :
concevoir un moule creux (32) ayant une surface interne (32i) qui définit un profil de surface de la pale composite ;
concevoir un noyau tissé (30) devant être placé dans le moule ;
concevoir une pluralité de plis (26) devant être ajustés entre la surface interne du moule (32) et
une surface externe (30o) du noyau tissé (30), la pluralité de plis (26) étant conçue après l'étape de conception du noyau tissé (30) ; et
assembler le noyau tissé conçu (30) et la pluralité de plis (26) dans le moule (32) pour créer la pale composite (10).

2. Procédé selon la revendication 1, comprenant en outre :
construire un modèle de noyau paramétrique comprenant :
découper un modèle de la pale en sections le long d'un axe dans le sens de l'envergure ;
insérer une courbe dans chaque section qui s'étend entre un côté d'aspiration et un côté de pression du modèle de pale ; et
définir un point sur chaque courbe sur la base d'un pourcentage P d'une longueur de la courbe, le point représentant une interface entre le noyau tissé et les plis, et le point étant utilisé dans l'étape de conception du noyau tissé.

3. Procédé selon la revendication 2, dans lequel l'étape de conception de la pluralité de plis (26) comprend :
peupler un espace entre la surface interne (32i) du moule (32) et la surface externe (30o) du noyau tissé (30) avec les plis (26).

4. Procédé selon la revendication 2 ou 3, comprenant en outre :
ajuster les emplacements des points sur les courbes pour optimiser localement les reprises de plis, par exemple ajuster les emplacements des points sur les courbes de telle sorte qu'il y ait un rapport minimal de 20:1 entre la distance des reprises de plis et l'épaisseur de pli de chaque pli (26).

5. Procédé selon l'une quelconque des revendications 2 à 4, dans lequel l'étape de définition d'un point sur chaque courbe sur la base d'un pourcentage P d'une longueur de la courbe comprend définir un point qui est perpendiculaire à une surface médiane du modèle de noyau paramétrique et parallèle à une base du modèle de pale.

6. Procédé selon l'une quelconque des revendications 2 à 5, comprenant en outre :
définir un deuxième point sur chaque courbe sur la base d'un deuxième pourcentage P2 de la longueur de la courbe, les points définissant une interface
entre les plis et un côté de pression du noyau tissé et les deuxièmes points définissant une
interface entre les plis et un côté d'aspiration du noyau tissé.

7. Procédé selon l'une quelconque des revendications précédentes, dans lequel le noyau tissé est un noyau tissé tridimensionnel.

8. Procédé selon l'une quelconque des revendications précédentes, dans lequel les plis (26) sont des plis composites incluant une pluralité de fibres et une résine.
